# EUROPÄISCHE PATENTANMELDUNG

(11) **EP 1 469 235 A1**
(43) Veröffentlichungstag der Anmeldung: **20.10.2004**
(21) Anmeldenummer: 03008967.6
(22) Anmeldetag: 17.04.2003
(51) Int. Cl.: F16H 61/00, F15B 11/17

(54) **Hydraulisches Steuer- und Regelsystem sowie Verfahren zum Einstellen von hydraulischen Druckniveaus**

(71) Anmelder: BorgWarner, Inc., Auburn Hills, MI 48326-1782 (US)
(72) Erfinder: Ebinger, Günter, 76684 Östringen (DE); Burmeister, Matthias, 69121 Heidelberg (DE); Sandstorm, Eric, Oxford, Michigan 48371 (US)
(74) Vertreter: Patentanwälte Westphal, Mussgnug & Partner

(57) **Zusammenfassung**

Die Erfindung betriff ein hydraulisches Steuer- und Regelsystem (1) mit einem von einer ersten Hydropumpe (4) mit Hydraulikflüssigkeit gespeisten Hochdruckkreis (2), dessen Hochdruckniveau (P_{A}) von einem ersten Hauptdruckregler (6) regelbar ist und mit einem von einer zweiten Hydropumpe (5) mit Hydraulikflüssigkeit gespeisten Niederdruckkreis (3), dessen Niederdruckniveau (P_{L}) von einem zweiten Hauptdruckregler (7) regelbar ist. Erfindungsgemäß ist vorgesehen, dass in dem Hochdruckkreis (2) ein Hydraulikflüssigkeitsablass (6.14, 6.6, 6.15) vorgesehen ist, über den der Niederdruckkreis (3) mit überschüssiger Hydraulikflüssigkeit aus dem Hochdruckreis (2) speisbar ist und/oder dass in dem Hochdruckkreis (2) ein Hydraulikflüssigkeitseinlass (6.12, 6.5, 6.13) vorgesehen ist, über den der Hochdruckkreis (2) mit fehlender Hydraulikflüssigkeit von der zweiten Hydropumpe (5) speisbar ist.

Die Erfindung betrifft weiterhin ein Verfahren zum Einstellen von hydraulischen Druckniveaus bei dem ein Hochdruckniveau (P_{A}) in einer ersten Hydropumpe (4) mit Hydraulikflüssigkeit gespeisten Hochdruckkreis (2) von einem ersten Hochdruckregler (6) geregelt wird und bei dem ein Niederdruckniveau (P_{L}) in einem von einer zweiten Hydropumpe (5) mit Hydraulikflüssigkeit gespeisten Niederdruckkreis (3) um einen zweiten Hauptdruckregler (7) geregelt wird. Erfindungsgemäß ist vorgesehen, dass der Niederdruckkreis (3) mit überschüssiger Hydraulikflüssigkeit aus dem Hochdruckkreis (2) gespeist wird und/oder dass der Hochdruckkreis (2) mit fehlender Hydraulikflüssigkeit von der zweiten Hydrogruppe (5) gespeist wird.

## Beschreibung

Die Erfindung betrifft ein hydraulisches Steuer- und Regelsystem gemäß dem Oberbegriff des Anspruchs 1 sowie ein Verfahren zum Einstellen von hydraulischen Druckniveaus nach dem Oberbegriff des Patentanspruchs 7.

Insbesondere bei Kraftfahrzeugen ist es üblich, dass ein hydraulisches Steuer- und Regelsystem vorhanden ist, welches unterschiedliche Hydraulikflüssigkeitskreise mit unterschiedlichen Druckniveaus unterhält. Zum Betrieb eines Automatikgetriebes, insbesondere eines Doppelkupplungsgetriebes, ist es insbesondere sinnvoll, zwei unterschiedliche Hydraulikflüssigkeitskreisläufe vorzusehen. Ein erster Kreis, der Hochdruckkreis, betätigt die Kupplungen und andere Aktuatoren und muss deshalb über ein relativ hohes Druckniveau verfügen. Der zweite Kreis, der Niederdruckkreis übernimmt Schmier- und Kühlaufgaben bei relativ niedrigen Drücken aber mit einem hohen Volumenstrombedarf. Um dies hinsichtlich des Wirkungsgrades günstig umzusetzen, ist die Verwendung einer Hydropumpe je Kreislauf sinnvoll. Dabei ist gemäß dem betriebsinternen Stand der Technik bekannt, einen ersten Hauptdruckregler für den Hochdruckkreis und einen zweiten Hauptdruckregler für den Niederdruckkreis vorzusehen.

Obwohl sich ein derartiges hydraulisches Steuer- und Regelsystem dem Grunde nach bewährt hat, entsteht weiterhin das Bedürfnis den Wirkungsgrad zu verbessern.

Die Aufgabe der Erfindung entsteht demzufolge darin, ein hydraulisches Steuer- und Regelsystem vorzustellen, bei dem das Fördervolumen der einzelnen Pumpenstufen verhältnismäßig klein gehalten werden kann. Weiterhin ist es Aufgabe der Erfindung, ein Verfahren zum Einstellen hydraulischer Druckniveaus bereitzustellen, welches gegenüber herkömmlichen Verfahren-einen verbesserten Wirkungsgrad aufweist.

Diese Aufgabe wird durch ein hydraulisches Steuer- und Regelsystem mit den Merkmalen des Patentanspruchs 1 sowie durch ein Verfahren zum Einstellen von hydraulischen Druckniveaus mit den Merkmalen des Patentanspruchs 7 erfindungsgemäß gelöst.

Vorteilhafte Ausführungen und Weiterbildungen der Erfindung sind in den Unteransprüchen angegeben.

Die Erfindung geht von einem hydraulischen Steuer- und Regelsystem an sich bekannter Art aus, mit einem von einer ersten Hydropumpe mit Hydraulikflüssigkeit gespeisten Hochdruckkreis, dessen Hochdruckniveau von einem ersten Hauptdruckregler regelbar ist und mit einem von einer zweiten Hydropumpe mit Hydraulikflüssigkeit gespeisten Niederdruckkreis, dessen Niederdruckniveau von einem zweiten Hauptdruckregler regelbar ist.

Der Erfindung liegt der Erfindungsgedanke zu Grunde, Hoch- und Niederdruckkreis miteinander zu vernetzen.

Erfindungsgemäß ist daher in dem Hochdruckkreis ein Hydraulikflüssigkeitsablass vorgesehen, über den der Niederdruckkreis mit überschüssiger Hydraulikflüssigkeit aus dem Hochdruckkreis speisbar ist. Alternativ hierzu oder zusätzlich sieht die Erfindung in dem Hochdruckkreis einen Hydraulikflüssigkeitseinlass vor über den der Hochdruckkreis mit fehlender Hydraulikflüssigkeit von der zweiten Hydropumpe speisbar ist.

Einerseits wird also die im Hochdruckkreis überschüssige Hydraulikflüssigkeit vorzugsweise durch den ersten Hauptdruckregler abgeregelt und kann nun im Niederdruckkreis verwendet werden, da es noch nutzbare Energie enthält. Andererseits ist erfindungsgemäß ebenfalls vorgesehen, dass bei hohem Volumenstrombedarf im Hochdruckkreis die Hydropumpe des Niederdruckkreises zum Hochdruckkreis dazugeschaltet werden kann. Dies ist insbesondere im Fall des vorstehend beschriebenen Automatikgetriebes (z. B. Doppelkupplungsgetriebe) zum Füllen der Kupplungen mit Hydraulikmittel sinnvoll. Durch die Vernetzung der beiden Kreisläufe (Hochdruckkreis und Niederdruckkreis) in der vorbeschriebenen Weise kann das Fördervolumen der einzelnen Pumpenstufen verhältnismäßig klein gehalten werden.

Wie bereits vorstehend angedeutet wurde, ist es erfindungsgemäß vorgesehen, dass der Hydraulikflüssigkeitsablass und/oder der Hydraulikflüssigkeitseinlass Bestandteile des ersten Hauptdruckreglers sind. Zusätzliche Regelkomponenten sind also grundsätzlich nicht erforderlich.

Erfindungsgemäß ist ferner vorgesehen, dass der erste Hauptdruckregler mittels eines in dem Hochdruckkreis vorgesehenen Ventils in Abhängigkeit vom Druck im Hochdruckkreis gesteuert wird. Üblicherweise kommt hier ein herkömmliches Elektromagnetventil zum Einsatz, welches über eine Druchflussblende an den Hochdruckkreis angeschlossen ist. Da ein derartiges Elektromagnetventil üblicherweise ohnehin zur Steuerung des ersten Hauptdruckreglers verwendet wird, sind nur geringfügige Modifikationen notwendig, um ein hydraulisches Steuer- und Regelsystem in der erfindungsgemäßen Art bereitzustellen.

Erfindungsgemäß ist weiterhin ein von der zweiten Hydropumpe mit Hydraulikflüssigkeit gespeister Zwischendruckkreis vorgesehen, über den der Niederdruckkreis mit der Hydraulikflüssigkeit speisbar ist. Gleichzeitig oder alternativ hierzu ist der Hochdruckkreis über diesen Zwischendruckkreis mit der fehlenden Hydraulikflüssigkeit speisbar. Ein derartiger Zwischendruckkreis stellt sicher, dass Schwankungen in einem der Hauptdruckkreise (Hoch- und Niederdruckkreis) keine oder nur geringfügige Auswirkungen auf den anderen Hauptdruckkreis haben.

In einer besonderen Ausgestaltung dieser Variante ist vorgesehen, dass die Speisung des Niederdruckkreises mit der Hydraulikflüssigkeit aus dem Zwischendruckkreis und/oder die Speisung des Hochdruckkreises mit der fehlenden Hydraulikflüssigkeit aus dem Zwischendruckkreis von dem ersten Hauptdruckregler regelbar ist. Es brauchen folglich keine zusätzlichen Ventile vorgesehen werden, die diese Aufgabe übernehmen, sondern es reicht die entsprechende Ausgestaltung des ersten Hauptdruckreglers.

Für den Fall, dass in dem Zwischendruckkreis ein Überdruck herrscht, beispielsweise weil aus dem Zwischendruckkreis nur eine geringe Menge Hydraulikflüssigkeit in den Hochdruckkreis abgegeben wird, ist erfindungsgemäß in dem Zwischendruckkreis ein Überdruckventil vorgesehen, über das der Niederdruckkreis mit überschüssiger Hydraulikflüssigkeit aus dem Zwischendruckkreis speispar ist. Diese zusätzliche Hydraulikflüssigkeitsmenge kann in einfacher Weise von dem zweiten Hauptdruckregler abgeregelt werden.

Ein Ausführungsbeispiel der Erfindung ist in der Zeichnung dargestellt. Es zeigen:

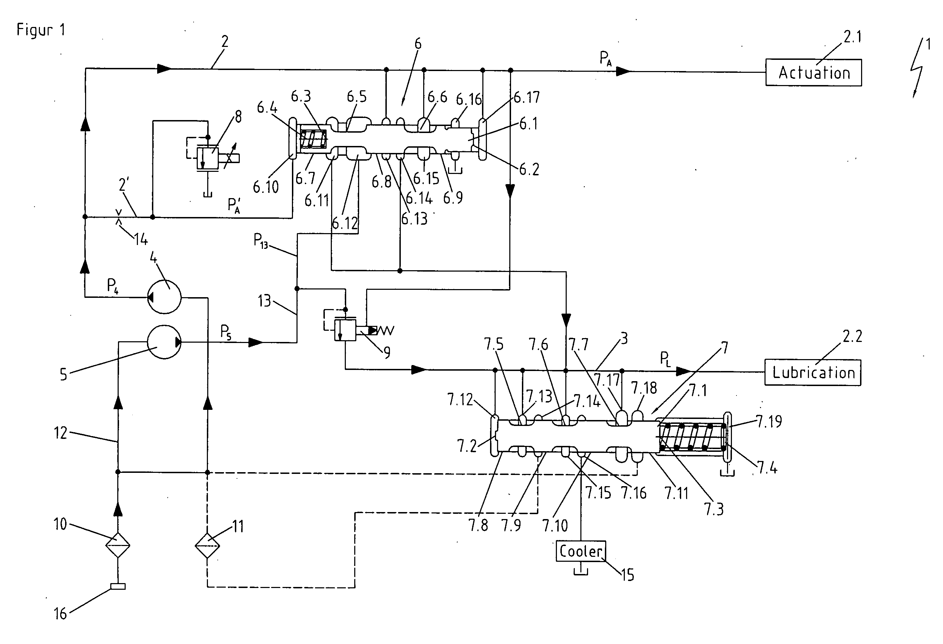

- Figur 1: ein Prinzipschaltbild eines erfindungsgemäßen hydraulischen Steuer- und Regelsystems, wie es beispielsweise zur hydraulischen Steuerung eines Doppelkupplungsgetriebes eingesetzt wird.

Das in der Figur 1 dargestellte hydraulische Steuer- und Regelsystem 1 basiert auf zwei Druckkreisen, einem Hochdruckkreis 2 mit Hilfe dessen Kupplungen und/oder sonstige Aktuatoren 2.1 betätigt werden, sowie einem Niederdruckkreis 3, welcher Schmier- und Kühlaufgaben 2.2 bei relativ niedrigen Drücken aber mit einem hohen Volumenstrombedarf übernimmt.

Der Hochdruckkreis 2 wird von einer ersten Hydropumpe 4 gespeist, welche von einem Filter 10 gefilterte Hydraulikflüssigkeit über einen Versorgungskreis 12 aus einem Hydraulikflüssigkeitsreservoir 16 entnimmt. Das Druckniveau P_{A} in diesem Hochdruckkreis 2 wird im Regelfall aus dem von der Hydropumpe 4 bereitgestellten Druck P₄ mit Hilfe des ersten Hauptdruckreglers 6 abgeregelt.

Der Niederdruckkreis 3 wird im wesentlichen von einer zweiten Hydropumpe 5 gespeist, welche die von dem Filter 10 gefilterte Hydraulikflüssigkeit über den Versorgungskreis 12 ebenfalls aus dem Hydraulikflüssigkeitsreservoir 16 entnimmt. Dabei wird im Regelfall der von dieser zweiten Hydropumpe 5 bereitgestellte Druck P₅ mit Hilfe eines zweiten Hauptdruckreglers 7 auf das Niederdruckniveau P_{L} abgeregelt.

Der zweite Hauptdruckregler 7 des Niederdruckkreises 3 ist in an sich bekannter Art ausgeführt. So umfasst der hydraulisch betätigbare zweite Hauptdruckregler 7 im vorliegenden Ausführungsbeispiel ein im wesentlichen zylinderförmiges Steuergehäuse, welches über dessen axialer Erstreckung acht Schlitze (oder Taschen) 7.12, 7.13, 7.14, 7.15, 7.16, 7.17, 7.18, 7.19 aufweist.

In diesem Steuergehäuse ist in axialer Richtung ein Kolben 7.1 begrenzt verschieblich geführt. Die erste Stirnseite 7.2 des Kolbens 7.1 bildet einen einendseitigen Anschlag an einer Endseite des Steuergehäuses. Zwischen der zweiten Stirnseite 7.3 des Kolbens 7.1 und der anderen Endseite des Steuergehäuses ist eine Kolbenbetätigungsfeder 7.4 angeordnet, welche die erste Stirnseite (bei fehlender sonstiger Krafteinwirkung auf den Kolben 7.1) gegen die eine Endseite des Steuergehäuses gedrückt hält.

Der Kolben 7.1 weist längs seiner axialen Erstreckung unterschiedliche Durchmesser auf. Es gibt vier Kolbenabschnitte 7.8, 7.9, 7.10, 7.11, welche im wesentlichen formschlüssig in der Innenwandung des Steuergehäuses geführt sind, sowie drei Kolbenabschnitte 7.5, 7.6, 7.7, welche einen kleineren Außendurchmesser aufweisen. Ein Kolbenabschnitt 7.5, 7.6, 7.7 der letztgenannten Art ist dabei in axialer Richtung jeweils zwischen zwei Kolbenabschnitten 7.8, 7.9, 7.10, 7.11 der erstgenannten Art angeordnet.

Erstreckt sich ein Kolbenabschnitt 7.5, 7.6, 7.7 der letztgenannten Art in einer bestimmten Stellung des Kolbens 7.1 in dem Steuergehäuse von einem Schlitz 7.12, 7.13, 7.14, 7.15, 7.16, 7.17, 7.18, 7.19 zu einem benachbarten Schlitz 7.12, 7.13, 7.14, 7.15, 7.16, 7.17, 7.18, 7.19, so ist ein Hydraulikflüssigkeitsdurchfluss zwischen diesen beiden benachbarten Schlitzen 7.12, 7.13, 7.14, 7.15, 7.16, 7.17, 7.18, 7.19 möglich. Ein Kolbenabschnitt 7.5, 7.6, 7.7 der letztgenannten Art wird daher im Folgenden als öffnender Kolbenabschnitt 7.5, 7.6, 7.7 bezeichnet. Die anderen formschlüssig an der Innenwandung des Steuergehäuses geführten Kolbenabschnitte 7.8, 7.9, 7.10, 7.11 werden nachfolgend als schließende Kolbenabschnitte 7.8, 7.9, 7.10 und 7.11 bezeichnet, da hier kein Durchfluss von Hydraulikflüssigkeit zwischen benachbarten Schlitzen 7.12, 7.13, 7.14, 7.15, 7.16, 7.17, 7.18, 7.19 möglich ist.

Ist der Druck P_{L} im Niederdruckkreis 3 kleiner als ein vorgebbarer Schwellwert, so befindet sich der Kolben 7.1 in der in der Figur 1 dargestellten Position. Hydraulikflüssigkeit kann aus dem Niederdruckkreis 3 über den zweiten Hauptdruckregler 7 nicht abfließen. Übersteigt der Druck P_{L} im Niederdruckkreis 3 diesen vorgebbaren Schwellwert, so wird die über den Schlitz 7.12 auf die Stirnseite 7.2 des Kolbens 7.1 geleitete Hydraulikflüssigkeit den Kolben 7.1 entgegen der Kraft der Kolbenbetätigungsfeder 7.4 nach rechts drücken. Dadurch ist ein Hydraulikflüssigkeitsdurchfluss vom Schlitz 7.13 zum Schlitz 7.14, vom Schlitz 7.15 zum Schlitz 7.16 sowie bei besonders hohen Drücken P_{L} auch vom Schlitz 7.17 zum Schlitz 7.18 möglich. Hydraulikflüssigkeit kann daher zum einen über den Filter 11 zur ersten Hydropumpe, zum Kühler 15 sowie bei besonders hohen Drücken P_{L} wiederum zur zweiten Hydropumpe 5 gelangen.

Der erste Hauptdruckregler 6 ist im vorliegenden Beispiel wie folgt ausgeführt:

Er umfasst ein im wesentlichen zylinderförmiges Steuergehäuse, welches über dessen axialer Erstreckung 8 Schlitze 6.10, 6.11, 6.12, 6.13, 6.14, 6.15, 6.16, 6.17 aufweist.

In dem Steuergehäuse ist in axialer Richtung ein Kolben 6.1 begrenzt verschieblich geführt. Die beiden Stirnseiten 6.2, 6.3 des Kolbens 6.1 bilden endseitige Anschläge an den jeweiligen Endseiten des Steuergehäuses. Eine Kolbenbetätigungsfeder 6.4 ist so in das Steuergehäuse des ersten Hauptdruckreglers 6 eingesetzt, dass die erste Stirnseite 6.2 bei vernachlässigbarer sonstiger Krafteinwirkung auf den Kolben 6.1 gegen die eine Endseite des Steuergehäuses gedrückt gehalten wird.

Der Kolben 6.1 weist ähnlich dem zweiten Hauptdruckregler 7 längs seiner axialen Erstreckung unterschiedliche Durchmesser auf. Es gibt zwei öffnende Kolbenabschnitte 6.5, 6.6 sowie drei schließende Kolbenabschnitte 6.7, 6.8 und 6.9.

Entsprechend dem vorgehend beschriebenen zweiten Hauptdruckregler 7 kann der Kolben 6.1 des ersten Hauptdruckreglers 6 entgegen der Betätigungskraft der Kolbenbetätigungsfeder 6.4 in eine beliebige Zwischenstellung verbracht werden. Erstreckt sich ein öffnender Kolbenabschnitt 6.5 oder 6.6 in einer bestimmten Stellung des Kolbens 6.1 in dem Steuergehäuse von einem Schlitz 6.11, 6.12, 6.13, 6.14, 6.15 zu einem benachbarten Schlitz 6.11, 6.12, 6.13, 6.14, 6.15, so ist wie vorhin ein Hydraulikflüssigkeitsdurchfluss zwischen diesen beiden benachbarten Schlitzen 6.11, 6.12, 6.13, 6.14, 6.15 möglich.

Ist der Druck P_{A} niedriger als ein vorgebbarer Schwellwert, so befindet sich der Kolben 6.1 am rechten Anschlag. Ein Hydraulikflüssigkeitsdurchfluss vom Hochdruckkreis 2 zum Niederdruckkreis 3 ist nicht möglich. Weiterhin ist auch kein Durchfluss vom Zwischendruckkreis 13 zum Niederdruckkreis 3 möglich. Jedoch besteht eine Durchflussverbindung vom Zwischendruckkreis 13 über den Schlitz 6.12 zum Schlitz 6.13 in den Hochdruckkreis 2. In dieser Kolbenposition speisen sowohl die erste Hydropumpe 4 als auch die zweite Hydropumpe 5 den Hochdruckkreis 2 aufgrund dessen hohen Volumenstrombedarfs.

Bei mittleren Druckverhältnissen P_{A} im Hochdruckkreis 2 befindet sich der Kolben 6.1 in der in der Figur 1 dargestellten Stellung. In diesem Fall wird der Hochdruckkreis 2 ausschließlich von der ersten Hydropumpe 4 gespeist. Der Niederdruckkreis 3 wird ausschließlich über den Zwischendruckkreis 13 und die Schlitze 6.12 und 6.11 von der zweiten Hydropumpe 5 gespeist.

Steigt der Druck P_{A} im Hochdruckkreis 2 weiter an, so wird der Kolben 6.1 aufgrund der über den Schlitz 6.17 auf die Stirnseite 6.2 des Kolbens 6.1 wirkenden Hydraulikflüssigkeit weiter nach links geschoben. Die Durchflussverbindung vom Zwischendruckkreis 13 über die Schlitze 6.12 und 6.11 auf den Niederdruckkreis 3 bleibt bestehen. Weiterhin,stellt der öffnende Kolbenabschnitt 6.6 eine Durchflussverbindung zwischen dem Schlitz 6.15 und dem Schlitz 6.14 her. Überschüssige Hydraulikflüssigkeit vom Hochdruckkreis 2 kann über die Schlitze 6.15 und 6.14 in den Niederdruckkreis 3 abfließen.

Befindet sich der Kolben 6.1 in Regelposition, so kann es Betriebspunkte geben, bei denen der Druck P₁₃ im Zwischendruckkreis 13 weiter ansteigen wird, weil die von der zweiten Hydropumpe 5 gelieferte Hydraulikflüssigkeit nicht mehr hinreichend schnell über die Schlitze 6.12 und 6.11 zum Niederdruckkreis 3 abgeführt werden kann. Aus diesem Grund sieht die Erfindung,ein Überdruckventil 9 vor, welches beim Überschreiten eines vorgebbaren Schwellwerts öffnet und einen Durchfluss vom Zwischendruckkreis 13 zum Niederdruckkreis 3 freigibt.

Das Elektromagnetventil 8 dient zur hydraulischen Vorsteuerung des ersten Hauptdruckreglers 6. Mit dem Elektromagnetventil 8 kann ein stromproportionales Drucksignal, der sog. Vorsteuerdruck P_{A}', erzeugt werden. Die Stromvorgabe erfolgt von einem zentralen elektronischen Getriebesteuergerät (nicht gezeichnet). Die Blende 14 in der Versorgungsleitung 2' zum Elektromagnetventil 8 begrenzt den zulaufenden Volumenstrom auf den Wert P_{A}' .

### Bezugszeichenliste

- 1: hydraulisches Steuer- und Regelsystem
- 2: Hochdruckkreis
- 2': Versorgungsleitung im Hochdruckkreis
- 2.1: Aktuatorik
- 2.2: Schmierung / Kühlung
- 3: Niederdruckkreis
- 4: erste Hydropumpe
- 5: zweite Hydropumpe
- 6: erster Hauptdruckregler
- 6.1: Kolben
- 6.2: erste Stirnseite
- 6.3: zweite Stirnseite
- 6.4: Kolbenbetätigungsfeder
- 6.5: öffnender Kolbenabschnitt
- 6.6: öffnender Kolbenabschnitt
- 6.7: schließender Kolbenabschnitt
- 6.8: schließender Kolbenabschnitt
- 6.9: schließender Kolbenabschnitt
- 6.10: Schlitz
- 6.11: Schlitz
- 6.12: Schlitz
- 6.13: Schlitz
- 6.14: Schlitz
- 6.15: Schlitz
- 6.16: Schlitz
- 6.17: Schlitz
- 7: zweiter Hauptdruckregler
- 7.1: Kolben
- 7.2: erste Stirnseite
- 7.3: zweite Stirnseite
- 7.4: Kolbenbetätigungsfeder
- 7.5: öffnender Kolbenabschnitt
- 7.6: öffnender Kolbenabschnitt
- 7.7: öffnender Kolbenabschnitt
- 7.8: schließender Kolbenabschnitt
- 7.9: schließender Kolbenabschnitt
- 7.10: schließender Kolbenabschnitt
- 7.11: schließender Kolbenabschnitt
- 7.12: Schlitz
- 7.13: Schlitz
- 7.14: Schlitz
- 7.15: Schlitz
- 7.16: Schlitz
- 7.17: Schlitz
- 7.18: Schlitz
- 7.19: Schlitz
- 8: Elektromagnetventil
- 9: Überdruckventil
- 10: Filter
- 11: Filter
- 12: Versorgungskreis
- 13: Zwischendruckkreis
- 14: Durchflussblende
- 15: Kühler
- 16: Hydraulikflüssigkeitsreservoir
- P₄: Druck der ersten Hydropumpe 4
- P₅: Druck der zweiten Hydropumpe 5
- P_{A}: Druck im Hochdruckkreis 2
- P_{A}': Druck in der Versorgungsleitung 2' des Hochdruckkreises 2 hinter der Durchflussblende 14
- P_{L}: Druck im Niederdruckkreis 3
- P₁₃: Druck im Zwischendruckkreis 13

## Patentansprüche

1. Hydraulisches Steuer- und Regelsystem (1)
- mit einem von einer ersten Hydropumpe (4) mit Hydraulikflüssigkeit gespeisten Hochdruckkreis (2), dessen Hochdruckniveau (P_{A}) von einem ersten Hauptdruckregler (6) regelbar ist und
- mit einem von einer zweiten Hydropumpe (5) mit Hydraulikflüssigkeit gespeisten Niederdruckkreis (3), dessen Niederdruckniveau (P_{L}) von einem zweiten Hauptdruckregler (7) regelbar ist
**dadurch gekennzeichnet, dass**
- in dem Hochdruckkreis (2) ein Hydraulikflüssigkeitsablass (6.14, 6.6, 6.15) vorgesehen ist, über den der Niederdruckkreis (3) mit überschüssiger Hydraulikflüssigkeit aus dem Hochdruckreis (2) speisbar ist und/oder dass
- in dem Hochdruckkreis (2) ein Hydraulikflüssigkeitseinlass (6.12, 6.5, 6.13) vorgesehen ist, über den der Hochdruckkreis (2) mit fehlender Hydraulikflüssigkeit von der zweiten Hydropumpe (5) speisbar ist.

2. Hydraulisches Steuer- und Regelsystem (1) nach Anspruch 1,
**dadurch gekennzeichnet, dass**
der Hydraulikflüssigkeitsablass (6.14, 6.5, 6.15) und/oder der Hydraulikflüssigkeitseinlass (6.12, 6.5, 6.13) Bestandteile des ersten Hauptdruckreglers (6) sind.

3. Hydraulisches Steuer- und Regelsystem (1) nach Anspruch 1 oder 2,
**dadurch gekennzeichnet, dass**
in dem Hochdruckkreis (2) ein Ventil (8) vorgesehen ist, welcher den ersten Hauptdruckregler (6) in Abhängigkeit vom Druck (P_{A}) im Hochdruckkreis (2) steuert.

4. Hydraulisches Steuer- und Regelsystem (1) nach einem der vorangegangenen Ansprüche,
**dadurch gekennzeichnet, dass**
ein von der zweiten Hydropumpe (5) mit Hydraulikflüssigkeit gespeister Zwischendruckkreis (13) vorgesehen ist, über den der Niederdruckkreis (3) mit der Hydraulikflüssigkeit speisbar ist und/oder über den der Hochdruckkreis (2) mit der fehlenden Hydraulikflüssigkeit speisbar ist.

5. Hydraulisches Steuer- und Regelsystem (1) nach Anspruch 4,
**dadurch gekennzeichnet, dass**
die Speisung des Niederdruckkreises (3) mit der Hydraulikflüssigkeit aus dem Zwischendruckkreis (13) und/oder die Speisung des Hochdruckkreises (2) mit der fehlenden Hydraulikflüssigkeit aus dem Zwischendruckkreis (13) von dem ersten Hauptdruckregler (6) regelbar ist.

6. Hydraulisches Steuer- und Regelsystem (1) nach Anspruch 5,
**dadurch gekennzeichnet, dass**
in dem Zwischendruckkreis (13) ein Überdruckventil (9) vorgesehen ist, über das der Niederdruckkreis (3) mit überschüssiger Hydraulikflüssigkeit aus dem Zwischendruckkreis (13) speisbar ist.

7. Verfahren zum Einstellen von hydraulischen Druckniveaus
- bei dem ein Hochdruckniveau (P_{A}) in einem von einer ersten Hydropumpe (4) mit Hydraulikflüssigkeit gespeisten Hochdruckkreis (2) von einem ersten Hochdruckregler (6) geregelt wird und
- bei dem ein Niederdruckniveau (P_{L}) in einem von einer zweiten Hydropumpe (5) mit Hydraulikflüssigkeit gespeisten Niederdruckkreis (3) von einem zweiten Hauptdruckregler (7) geregelt wird
**dadurch gekennzeichnet, dass**
- der Niederdruckkreis (3) mit überschüssiger Hydraulikflüssigkeit aus dem Hochdruckkreis (2) gespeist wird und/oder dass
- der Hochdruckkreis (2) mit fehlender Hydraulikflüssigkeit von der zweiten Hydropumpe (5) gespeist wird.

8. Verfahren nach Anspruch 7,
**dadurch gekennzeichnet, dass**
die Speisung des Niederdruckkreises (3) mit der überschüssigen Hydraulikflüssigkeit aus dem Hochdruckkreis (2) und/oder die Speisung des Hochdruckkreises (2) mit der fehlenden Hydraulikflüssigkeit von der zweiten Hydropumpe (5) von dem ersten Hauptdruckregler (6) geregelt wird.

9. Verfahren nach Anspruch 8,
**dadurch gekennzeichnet, dass**
der erste Hauptdruckregler (6) von einem in dem Hochdruckkreis (2) vorgesehenen Ventil (8) in Abhängigkeit von dem Druck (P_{A}) in Hochdruckkreis (2) gesteuert wird.

10. Verfahren nach einem der Ansprüche 7 bis 9,
**dadurch gekennzeichnet, dass**
von der zweiten Hydropumpe (5) ein Zwischendruckkreis (13) mit Hydraulikflüssigkeit gespeist wird, über den der Niederdruckkreis (3) mit der Hydraulikflüssigkeit gespeist wird und/oder über den der Hochdruckkreis (2) mit der fehlenden Hydraulikflüssigkeit gespeist wird.

11. Verfahren nach Anspruch 10,
**dadurch gekennzeichnet, dass**
die Speisung des Niederdruckkreises (3) mit der Hydraulikflüssigkeit aus dem Zwischendruckkreis (13) und/oder die Speisung des Hochdruckkreises (2) mit der fehlenden Hydraulikflüssigkeit aus dem Zwischendruckkreis (13) von dem ersten Hauptdruckregler (6) geregelt wird.

12. Verfahren nach Anspruch 11,
**dadurch gekennzeichnet, dass**
der Niederdruckkreis (3) bei Überdruck in dem Zwischendruckkreis (13) über ein Überdruckventil (9) mit der überschüssigen Hydraulikflüssigkeit aus dem Zwischendruckkreis (13) gespeist wird.

13. Verwendung des Verfahrens nach einem der Ansprüche 7 bis 12 zur Druckregelung in einem Automatikgetriebe, insbesondere in einem Doppelkupplungsgetriebe.

14. Automatikgetriebe, insbesondere Doppelkupplungsgetriebe, mit einem hydraulischen Steuer- und Regelsystem (1) nach einem der Ansprüche 1 bis 6.
